# EUROPEAN PATENT SPECIFICATION

(11) **EP 1 496 290 B1**
(45) Date of publication and mention of the grant of the patent: **03.05.2006**
(21) Application number: 03425445.8
(22) Date of filing: 07.07.2003
(51) Int. Cl.: F16H 7/08

(54) **A mechanical tensioner for the timing chain of a distribution system**
Kettenspanner für eine Verteilerkette
Tendeur de chaîne pour la chaîne de distribution

(43) Date of publication of application: 12.01.2005
(73) Proprietor: Morse Tec Europe S.r.l., 20043 Arcore (Milano) (IT)
(72) Inventor: Covini, Lorenzo, 20121 Milano (IT); Merelli, Roberto, 20052 Monza (Milano) (IT)
(74) Representative: Coggi, Giorgio

(56) References cited:
- EP-A- 0 785 375
- GB-A- 484 128
- US-A- 5 037 357
- US-A- 5 931 754

## Description

The present invention refers to a distribution system for an engine, in particular for an internal combustion engine, in which the mechanical timing chain tensioner can be integrated with guide means for said chain.

A distribution system of an internal combustion engine can be timed by means of a chain transmission, in which the chain is wound on two or more sprockets, one of which is driving and takes its motion (even indirectly) from the drive shaft to transmit it to one or more shafts.

Since, for reasons of adjustment, wear of materials and or take-up of play, it is often necessary to compensate for a certain slack on the chain, use is known of shoe tensioning devices, in which a shoe is biased with adjustable force against a branch of the chain.

Various means are known for biasing the shoe against the chain, amongst which there are hydraulic tensioners (in which a fixed element is mounted on the engine block and a movable element is slidable with respect to the fixed element and is biased against the shoe by a spring and by a fluid fed under pressure into the tensioner) and mechanical tensioners, in which the shoe is biased against the chain by elastic means.

Mechanical tensioners are known in which the elastic means are made up of at least one preloaded spiral spring or leaf spring: said tensioners are simple and cheap, but their ability to keep the chain taut and their reliability are limited by the amount of preloading that can be given to the at least one spring and by the ability of the at least one spring to hold this preloading over time and, more generally, its elastic characteristics.

Sometimes "mechanised" hydraulic tensioners are used as mechanical tensioners, eliminating the means able to allow and to regulate the flow of fluid under pressure therein: said "mechanised" tensioners have better performances than tensioners consisting of at least one spring but - being made of metal, preferably aluminium - they are expensive and in any case too expensive if compared with their performances.

EP-A-0 785 375 discloses a hydraulic tensioner which must be "mechanised" to be used in place of a mechanical tensioner.

Document US-A1-5 037 357 constitutes the closest prior art and discloses a spring biased tensioner comprising a longitudinal hole formed in the tensioner body where the piston and spring are coaxially located.

Object of the present invention is to overcome these drawbacks by providing a mechanical tensioner, possibly integrated with chain guide means, that provides the performances of a "mechanised" tensioner and can be made cheaply and/or quickly, reducing manufacturing costs.

This object is achieved by a mechanical tensioner - possibly integrated with chain guide means - made according to the invention, which has the characteristics of appended independent claim 1.

Further characteristics of the invention are apparent from the dependent claims.

The present invention refers to a mechanical tensioner comprising a plastic body in which a longitudinal through hole is formed where there are allocated the piston and the spring that constitute the mechanical tensioner and a metal bushing able to receive the piston shank; one end of the spring rests against the metal bushing.

The spring is preferably a spiral spring.

The mechanical tensioner can be integrated with chain guide means situated at one end of the plastic body.

Further characteristics of the invention will be made clearer by the detailed description that follows, referring to a purely exemplary and therefore non-limiting embodiment illustrated in the appended figures, in which:
- Figure 1 shows a perspective view of a mechanical tensioner made according to the present invention, integrated with chain guide means;
- Figure 2 shows a further perspective view, opposite to that of Figure 1, of the tensioner of Figure 1;
- Figure 3 shows the tensioner of Figure 1, partially sectioned to show the longitudinal through hole in which the piston, the spring which constitute the mechanical tensioner and a metal bushing are placed.

In the appended figures, corresponding elements are designated by the same reference numerals.

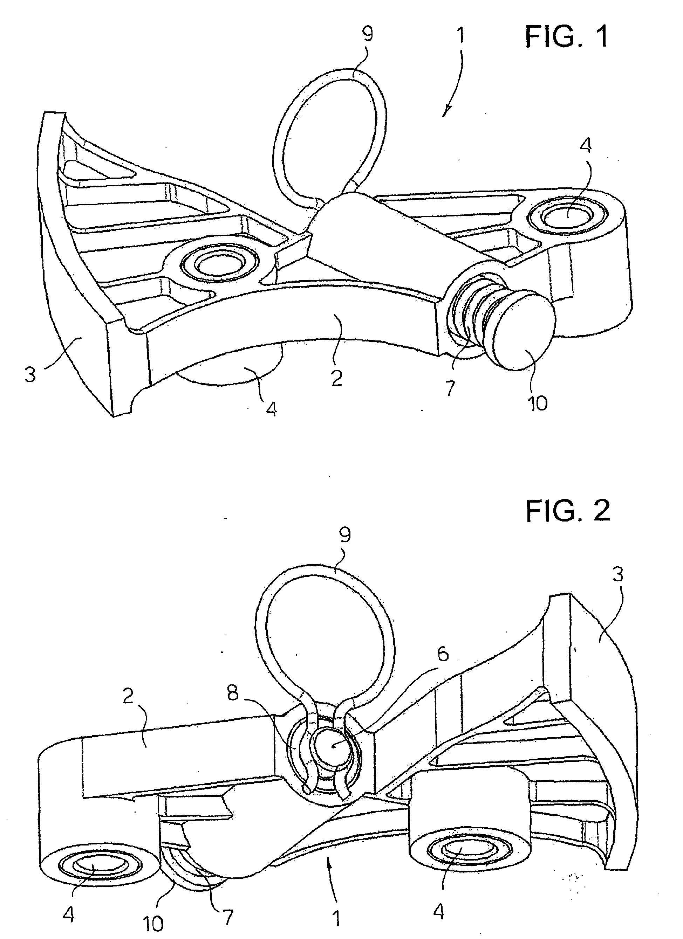

Figure 1 shows a first perspective view of a mechanical tensioner according to the present invention, designated as a whole by 1, integrated with chain guide means.

The mechanical tensioner 1 comprises a plastic body 2 having at one end guide means 3 for the chain (omitted in the appended figures for the sake of simplicity of the graphic representation) in which two metal bushings 4 are inserted for fixing of the tensioner to the engine block.

The chain guide means 3 can be omitted without departing from the scope of the present invention.

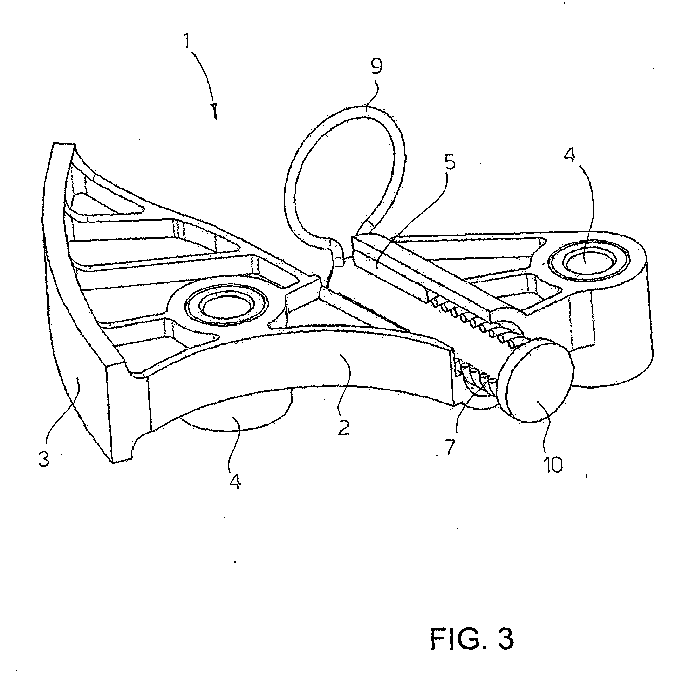

In the plastic body 2 there is formed a longitudinal through hole (Figure 3) in which there are allocated the piston 6 and the spring 7 which constitute the mechanical tensioner 1 and a metal bushing 5 able to receive the shank of the piston 6; as can be seen in Figure 3, one end of the spring 7 rests against the metal bushing 5.

In the embodiment described here the spring 7 is a spiral spring but, without departing from the scope of the invention, it is possible to replace the spiral spring 7 with a leaf spring or a spring of another functionally equivalent type.

Under the action of the spiral spring 7, the head 10 of the piston 6 acts on a shoe (omitted in the appended figures for the sake of simplicity of the graphic representation), which in turn acts on the chain keeping it under tension.

The metal bushings 4 and 5 are inserted in the plastic body 2 in a per se known manner; the metal bushing 5 at least is preferably inserted in the plastic body 2 by co-moulding.

Also visible in Figure 1 is an elastic element 9 belonging to means able to block the piston 6 during transportation of the mechanical tensioner 1.

Said blocking means can be seen in Figure 2 - which shows a perspective view of the tensioner 1 opposite to that shown in Figure 1 - and comprise an elastic element 9, snap inserted in an annular space formed at the end of the piston 6 opposite that which carries the head 10, which rests against the outer surface 8 of the bushing 5 and/or of the plastic body 2.

In the exemplary embodiment described here the elastic element 9 is a clip-type element but, without departing from the scope of the invention, it is possible to replace the clip-type elastic element 9 with another functionally equivalent elastic element.

Said locking means can be omitted without departing from the scope of the present invention.

Figure 3 shows the tensioner 1 of Figure 1, partially sectioned to show the longitudinal through hole in which are placed the piston 6 and the spiral spring 7 which constitute the mechanical tensioner 1 and the metal bushing 5 able to receive the shank of the piston 6; one end of the spiral spring rests against the metal bushing 5.

Also visible in Figure 3 is the elastic element 9 belonging to the blocking means of the piston 6.

Without departing from the scope of the invention, a person skilled in the art can make to the tensioner of the present invention all those improvements suggested by his experience and by the natural evolution of the art.

## Claims

1. A spring biased tensioner suitable for a timing chain distribution system comprising
- a body (2) wherein a longitudinal through hole is formed,
- a piston (6) and a spring (7) coaxially located in said hole, constituting a mechanical tensioner, the piston (6) having a shank and a head (10)
- a metal bushing (5) receiving the shank of the piston (6),
**characterized in that**
- the body (2) is made of plastic, and
- one end of the spring (7) rests against the said metal bushing (5) the other end is in contact with the head (10) of the piston (6).

2. A spring biased tensioner (1) according to claim 1, **characterised in that** it is integrated with guide means (3) for the timing chain.

3. A spring biased tensioner (1) according to claim 2, **characterised in that** the guide means (3) of the timing chain are allocated at one end of the plastic body (2).

4. A spring biased tensioner (1) according to claim 1, **characterised in that** the spring (7) is a spiral spring.

5. A spring biased tensioner (1) according to claim 1, **characterised in that** the metal bushing (5) is inserted in the plastic body (2) by means of co-moulding.

6. A spring biased tensioner (1) according to claim 1, **characterised in that** it further comprises means able to block the piston (6) during transportation of the mechanical tensioner (1).

7. A spring biased tensioner (1) according to claim 6, **characterised in that** the means for blocking the piston (6) comprise an elastic element (9), snap inserted in an annular space formed at the end of the piston (6) opposite to the head (10) of the piston (6).

8. A spring biased tensioner (1) according to claim 7, **characterised in that** the elastic element (9) is a clip-type element.

9. A spring biased tensioner (1) according to claim 7, **characterised in that** the elastic element (9) rests against an outside surface (8) of the metal bushing (5).

10. A spring biased tensioner (1) according to claim 7, **characterised in that** the elastic element (9) rests against an outside surface of the plastic body (2).

## Patentansprüche

1. Eine federgesteuerte Spannvorrichtung fiir die Steuerkette eines Verteilungssystems, welche folgendes umfasst:
- einen Körper (2), in dem sich eine durchgehende Längsöffnung befindet;
- ein Kolben (6) und eine Feder (7), die koaxial in dieser Öffnung angeordnet sind und eine mechanische Spannvorrichtung bilden, wobei der Kolben (6) einen Schaft und einen Kopf (10) aufweist;
- eine Metallbuchse (5), die den Schaft des Kolbens (6) aufnimmt,
**dadurch gekennzeichnet, dass**
- der Körper (2) aus Kunststoff besteht, und
- ein Ende der Feder (7) gegen die genannte Metallbuchse (5) lehnt und das andere Ende mit dem Kopf (10) des Kolbens (6) in Berührung steht.

2. Eine federgesteuerte Spannvorrichtung (1) gemäß Anspruch 1, **dadurch gekennzeichnet, dass** sie durch Führungselemente (3) fiir die Steuerkette ergänzt wird.

3. Eine federgesteuerte Spannvorrichtung(1) gemäß Anspruch 2, **dadurch gekennzeichnet, dass** die Führungselemente (3) der Steuerkette an einem Ende des Kunststoffkörpers (2) angeordnet sind.

4. Eine federgesteuerte Spannvorrichtung (1) gemäß Anspruch 1, **dadurch gekennzeichnet, dass** die Feder (7) eine Spiralfeder ist.

5. Eine federgesteuerte Spannvorrichtung (1) gemäß Anspruch 1, **dadurch gekennzeichnet, dass** die Metallbuchse (5) durch gleichzeitiges Formen in den Kunststoffkörper eingesetzt wird.

6. Eine federgesteuerte Spannvorrichtung (1) gemäß Anspruch 1, **dadurch gekennzeichnet, dass** sie des weiteren Elemente umfasst, die in der Lage sind, den Kolben (6) während des Transports der mechanischen Spannvorrichtung (1) zu blockieren.

7. Eine federgesteuerte Spannvorrichtung (1) gemäß Anspruch 6, **dadurch gekennzeichnet, dass** die Elemente zur Blockierung des Kolbens (6) ein elastisches Element (9) umfassen, das in einen ringförmigen Raum einschnappt, der sich am Ende des Kolbens (6) gegenüber dem Kopf (10) des Kolbens (6) befindet.

8. Eine federgesteuerte Spannvorrichtung (1) gemäß Anspruch 7, **dadurch gekennzeichnet, dass** es sich bei dem elastischen Element (9) um ein klammerförmiges Element handelt.

9. Eine federgesteuerte Spannvorrichtung (1) gemäß Anspruch 7, **dadurch gekennzeichnet, dass** das elastische Element (9) gegen eine äußere Oberfläche (8) der Metallbuchse (5) lehnt.

10. Eine federgesteuerte Spannvorrichtung (1) gemäß Anspruch 7, **dadurch gekennzeichnet, dass** das elastische Element (9) gegen eine äußere Oberfläche des Kunststoffkörpers (2) lehnt.

## Revendications

1. Tendeur à ressort idéal pour un système de distribution à chaîne de commande comprenant
- un corps (2) où un orifice de passage longitudinal est réalisé,
- un piston (6) et un ressort (7) placés de façon co-axiale dans ledit orifice, constituant un tendeur mécanique, le piston (6) ayant une tige et une tête (10)
- un coussinet métallique (5) accueillant la tige du piston (6),
**caractérisé en ce que**
- le corps (2) est réalisé dans une matière plastique, et
- une extrémité du ressort (7) appuie contre ledit coussinet métallique (5), l'autre extrémité est en contact avec la tête (10) du piston (6).

2. Tendeur à ressort (1) selon la revendication 1, **caractérisé en ce qu'**il est intégré aux dispositifs de guidage (3) pour la chaîne de commande.

3. Tendeur à ressort (1) selon la revendication 2, **caractérisé en ce que** les dispositifs de guidage (3) de la chaîne de commande sont placés à une extrémité du corps en plastique (2).

4. Tendeur à ressort (1) selon la revendication 1, **caractérisé en ce que** le ressort (7) est un ressort à spirale.

5. Tendeur à ressort (1) selon la revendication 1, **caractérisé en ce que** le coussinet métallique (5) est introduit dans le corps en plastique (2) au moyen d'un co-moulage.

6. Tendeur à ressort (1) selon la revendication 1, **caractérisé en ce qu'**il comprend également des dispositifs en mesure de bloquer le piston (6) pendant le transport du tendeur mécanique (1).

7. Tendeur à ressort (1) selon la revendication 6, **caractérisé en ce que** les dispositifs de blocage du piston (6) comprennent un élément élastique (9), introduit par enclenchement dans un espace annulaire réalisé à l'extrémité du piston (6) en face de la tête (10) du piston (6).

8. Tendeur à ressort (1) selon la revendication 7, **caractérisé en ce que** l'élément élastique (9) est un élément de type en collier.

9. Tendeur à ressort (1) selon la revendication 7, **caractérisé en ce que** l'élément élastique (9) appuie contre une surface extérieure (8) du coussinet métallique (5).

10. Tendeur à ressort (1) selon la revendication 7, **caractérisé en ce que** l'élément élastique (9) appuie contre une surface extérieure du corps en plastique (2).
